# EUROPEAN PATENT APPLICATION

(11) **EP 0 763 378 A2**
(43) Date of publication of application: **19.03.1997**
(21) Application number: 96114490.4
(22) Date of filing: 10.09.1996
(51) Int. Cl.: B01F 17/00, C09B 67/00

(54) **Non-aqueous type pigment dispersing agent, composition containing thereof, and non-aqueous pigment dispersion**

(30) Priority: 11.09.1995 JP 232168/95; 11.09.1995 JP 232170/95; 18.09.1995 JP 238163/95; 18.09.1995 JP 238165/95
(71) Applicant: TOYO INK MANUFACTURING CO., LTD., Tokyo (JP)
(72) Inventor: Takashi, Kamikubo, Toyo Ink Manufacturing Co., Ltd, Chuo-ku, Tokyo (JP); Tadashi, Itabashi, Toyo Ink Manufacturing Co., Ltd, Chuo-ku, Tokyo (JP); Katsuhiko, Sawamura, Toyo Ink Manuf. Co., Ltd., Chuo-ku, Tokyo (JP)
(74) Representative: Goddar, Heinz J., Dr.

(57) **Abstract**

The present invention provide a non-aqueous type pigment dispersing agent having at least one portion which has a high affinity with a pigment and which has at least one type selected from the group consisting of an organic dye, anthraquinone and acridone only at a terminal end or at both terminal ends of at least one polymer selected from a linear urethanic polymer and a linear acrylic polymer, a pigment composition using the same and a pigment dispersion. The portion having a high affinity with the pigment can be adsorbed efficiently on the surface of a pigment. At the same time pigment, for example, used for ink or paint can be dispersed stably due to the affinity between the polymer portion and a disperse medium to improve the adaptability in use and the quality of coated products.

## Description

### Field of the Invention

The present invention concerns a dispersing agent for pigment particles and, more specifically, it relates to a non-aqueous type pigment dispersing agent for improving the adaptability for use of printing ink or paint, a pigment composition containing the same and a non-aqueous pigment dispersion.

### Description of the Related Art

Generally, in various kinds of coatings or ink compositions, a practically useful pigment having a clear tone and a high tinting strength contains fine particles. However, it has been known that when fine particles of pigment are dispersed in a non-aqueous vehicle such as offset ink, gravure ink or paint, a stable dispersion can not be obtained easily so that in various problems which exert serious influence upon manufacturing operation and value of obtained products arises.

For example, a dispersion containing a pigment comprising fine particles often exhibits high viscosity, so that difficulties, for example, upon taking out the dispersion from a dispersing apparatus or transporting the dispersion arise. Further, the dispersion sometimes causes gelation during storage and becomes not usable.

In addition, when different kinds of paints are mixed for use, color segregation or sedimentation due to agglomeration of the pigment sometimes causes unevenness of color or noticeable deterioration of tinting strength for colored products. Further, in such an unstable dispersion, the coated layer surface on the colored products tends to be deteriorated so that reduction in gloss, defective leveling and the like sometimes arise.

Further, in some organic pigments, crystallized states of the pigment sometimes change. That is, since a crystal particles of the pigment change from an unstable energy state to a stable state while the size or form of the crystal changes in a non-aqueous vehicle such as offset ink, gravure ink, paint and the like, remarkable change of hue, reduction of tinting strength, formation of coarse particles and the like may be caused to deteriorate the commercial value of colored products.

For overcoming the various problems described above, many proposals have been made so far.

They are classified generally in view of technical methods into the following three groups.
1. A method of coating pigment particles with a colorless compound such as silicon oxide, aluminum oxide and tertiary butyl benzoic acid as shown in US Patent Nos. 3370971 and 2965511.
2. A method of mixing a compound obtained by introducing a substituent such as a sulfonic group, sulfone amide group, aminomethyl group and phthalimidomethyl group to a side chain of an organic pigment as a basic structure, as typically shown by Japanese Patent Application Publication (JP-B) No. 41-2466 and US Patent No. 2855408.
3. A method of mixing polymer dispersing agents typically shown by Japanese Patent Application Publication (JP-B) No. 57-25251 and Japanese Patent Application Laid-Open (JP-A) No. 61-285266.

The method (2) above has a much greater effect as compared with the method (1), with regard to the non-agglomerating property and crystal stability of a pigment in a non-aqueous vehicle and can provide a sufficient effect in most cases even by a relatively simple mixing method. However, the effect of each of the compounds depends greatly on the composition of the vehicle used and a compound having versatile use effective to all the vehicles has not yet been found.

The method (3) above is less influenced by the vehicle composition and is extensibly used. However, the method (3) is not always effective for the dispersion stability of the pigment because of weak interaction between the polymer type dispersing agent and the pigment particles.

On the other hand, Japanese Patent Application (JP-A) Laid-Open Nos. 63-175080 and 4-139262 disclose a polymer type dispersing agent in which an organic dye is coupled with a polymer. It is supposed that since interaction between the organic dye contained in the polymer type dispersing agent and the pigment particles is enhanced adsorption of the polymer type dispersing agent to the pigment particle is promoted to improve the dispersibility. However, in the polymer type dispersing agent described in this patent literature, the organic dye is coupled with the polymer by using functional groups present at random in the polymer. According to this method, since the organic dye is introduced at random into the polymer, and the affinity between the polymer portion and a disperse medium is weakened, it is difficult to ensure a sufficient adsorption layer required for the stabilization of dispersion or, since the solubility in the disperse medium is decreased as the amount of the organic dye or the heterocyclic compound introduced into the polymer increases, a sufficient adsorption layer required for the stabilization of dispersion can not be mentioned.

### SUMMARY OF THE INVENTION

An object of the present invention is to overcome the foregoing various drawbacks and to provide a non-aqueous type pigment dispersing agent capable of dispersing a pigment satisfactorily, and capable of being produced with an industrial advantage, a pigment composition containing the same and a non-aqueous pigment dispersion.

That is, the present invention provides, in accordance with a first aspect, a non-aqueous type pigment dispersing agent having a portion which has a high affinity with a pigment and which has at least one type selected from the group consisting of an organic dye, anthraquinone and acridone only at a terminal end or at both terminal ends of at least one polymer selected from the group consisting of a linear urethanic polymer and a linear acrylic polymer.

The present invention provides, in accordance with a second aspect, a non-aqueous type pigment dispersing agent as defined in the first aspect, wherein the linear urethanic polymer has at least one group selected from the group consisting of primary amino group, secondary amino group, hydroxy group and isocyanate group only at a terminal end or at both terminal ends of the polymer, the portion having a high affinity with the pigment has at least one reactive group selected from the group consisting of -COCl, -SO₂Cl, -CH₂Cl, -CH₂NHCOCH₂Cl, -COOH, -NH₂, -NHR (R represents an alkyl group and a substituted alkyl group) and -OH, and the group at the terminal end or at the both terminal ends of the linear urethanic polymer is made to react with the reactive group in the portion having a high affinity with the pigment.

The present invention provides, in accordance with a third aspect, a non-aqueous type pigment dispersing agent as defined in the first aspect, wherein the linear acrylic polymer has a primary amino group and/or a secondary amino group only at a terminal end or at both terminal ends of the polymer, the portion having a high affinity with the pigment has at least one reactive group selected from the group consisting of COCl, -SO₂Cl, -CH₂Cl and -CH₂NHCOCH₂Cl, and the primary amino group and/or the secondary amino group is made to react with the reactive group.

The present invention provides, in accordance with a fourth aspect, a non-aqueous type pigment dispersing agent as defined in the third aspect, wherein the linear acrylic polymer is a linear acrylic polymer formed by polymerizing a monomer having a radical polymerizable unsaturated bond by using a chain transfer agent having a primary amino group and/or a secondary amino group.

The present invention provides, in accordance with a fifth aspect, a non-aqueous type pigment dispersing agent as defined in the first aspect, wherein the linear acrylic polymer is formed by polymerizing a monomer having a radical polymerizable unsaturated bond by using the portion which has a high affinity with the pigment and has an -SH group as a chain transfer agent.

The present invention provides, in accordance with a sixth aspect, a pigment composition comprising a non-aqueous type pigment dispersing agent as defined in any one of first to fifth aspects, and a pigment.

The present invention provides, in accordance with a seventh aspect, a non-aqueous pigment dispersion comprising an aqueous type pigment dispersing agent as defined in any one of first to fifth aspects, a pigment, and a non-aqueous resin.

### DETAILED DESCRIPTION OF THE INVENTION

The present invention will be explained in more detail hereinafter.

Since the pigment dispersing agent according to the present invention is of such a structure that has a portion which has a high affinity with a pigment and which has at least one type selected from the group consisting of organic dye, anthraquinone and acridone only at a terminal end or both terminal ends of a polymer chain, an organic dye, anthraquinone or acridone can be efficiently adsorbed on the surface of a pigment, and the adsorption of the organic dye, anthraquinone or acridone on the pigment can be stabilized efficiently by a strong affinity between the polymer portion and a disperse medium.

Further, in accordance with the synthesis technique of the present invention, a small amount of the organic dye, anthraquinone or acridone can be introduced at a high accuracy into the dispersing agent by utilizing at least one of the terminal ends of the polymer.

In the present invention, a portion which has a high affinity with a pigment, and which has at least one type selected from the group consisting of the organic dye, anthraquinone and acridone is hereinafter collectively referred to as an organic dye or the like unless otherwise specified.

The organic dyes or the like used in the present invention include for example, organic dyes such as phthalocyanine series, insoluble azo series, azo-lake series, anthraquinone series, acridone series, quinacridone series, dioxazine series, diketopyrrolopyrrole series, anthrapyridine series, anthanthrone series, indanthrone series, flavanthrone series, perinone series, perylene series, thioindigo series, isoindolinone series and benzimidazolone series dyes, as well as anthraquinone and acridone.

Anthraquinone or acridone differs from anthraquinone type organic dyes or acridone type organic dyes in that the former is represented by the following formula (1) or (2), while the latter has a structure represented by the following formula (3), (4) or (5) that has a dimeric or higher order structure relative to that represented by the formula (1) or (2). While anthraquinone or acridone shown by the following formula (1) or (2) is colorless or only slightly colored to pale yellow, coloration is strengthened as a monomeric structure is extended sequentially to form anthraquinone type organic dyes or acridone type organic dyes.

In a case of a non-aqueous type pigment dispersing agent with a colorless or only slightly colored anthraquinone or acridone, since the non-aqueous type pigment dispersing agent is colorless or slightly colored, the agent is highly versatile and preferred in that it does not deteriorate the hue of a pigment used when the agent is applied to paint, ink or the like.

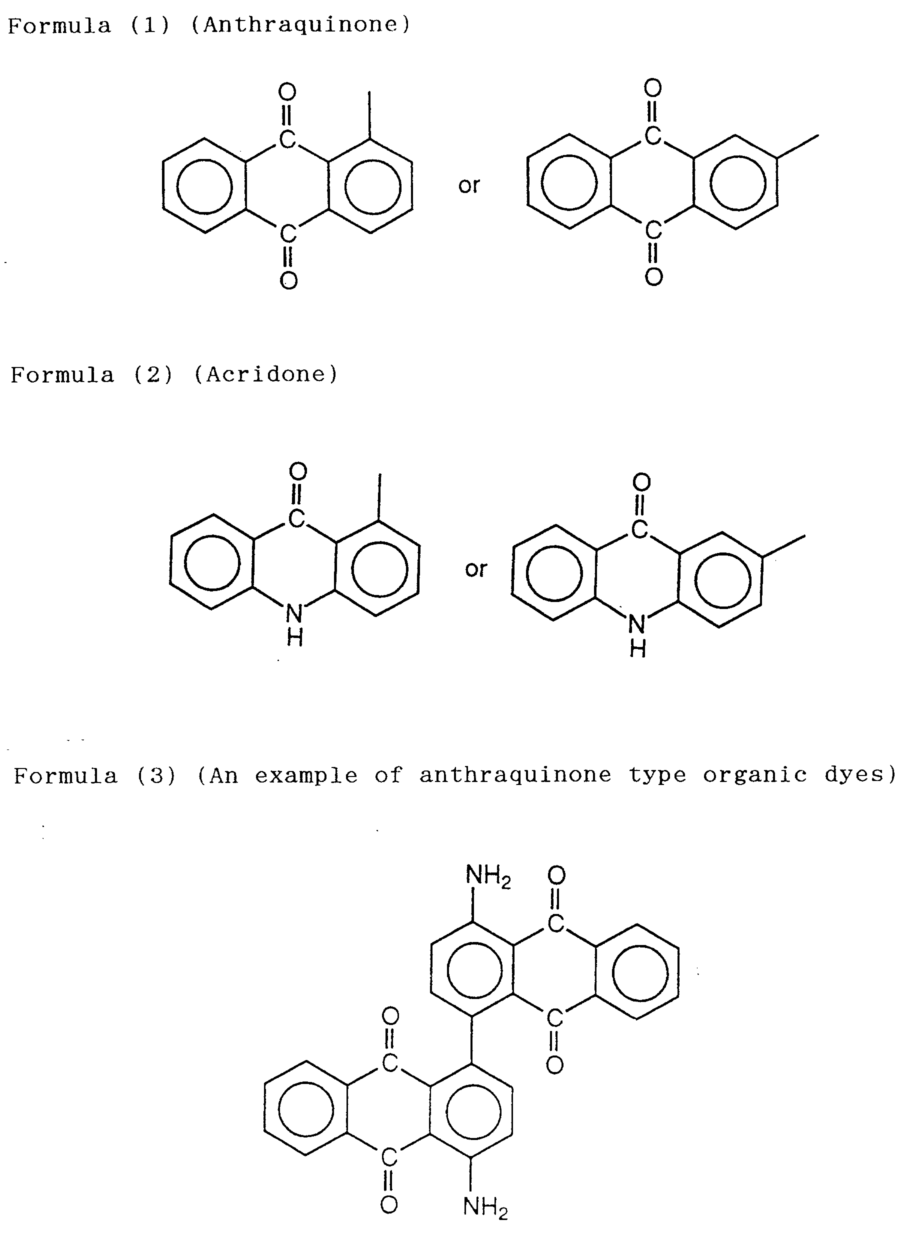

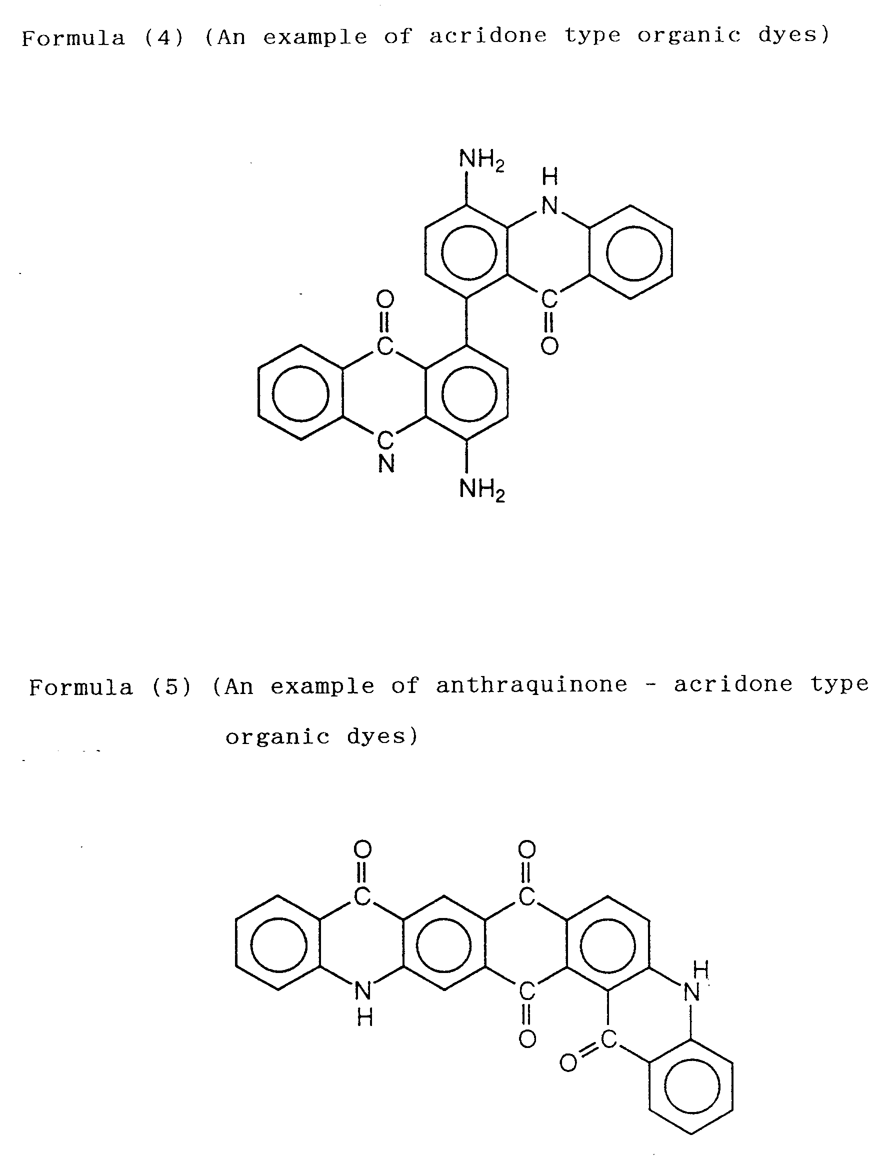

The organic dye or the like described above to which -COCl, -SO₂Cl, -CH₂Cl, -CH₂NHCOCH₂Cl, -COOH, -NH₂, -NHR (R represents an alkyl group or a substituted alkyl group), -OH or the like is introduced in accordance with the method as described in Japanese Patent Application Laid-Open (JP-A) Nos. 56-167762, 52-132031, or the like, is served for reaction with a non-aqueous linear urethanic polymer or a non-aqueous linear acrylic polymer to be described later.

The organic dye or the like having -COCl or -SO₂Cl can be obtained, for example, by allowing to react the organic dye or the like with chlorosulfonic acid to introduce -SO₂Cl or, if the organic dye or the like has a functional group such as a sulfonic group or carboxyl group, by allowing to react such a functional group, for example, with thionyl chloride or phosphorus pentachloride.

The organic dye or the like having -CH₂Cl or -CH₂NHCOCH₂Cl can be obtained by allowing to react the organic dye or the like with paraformaldehyde and chlorosulfonic acid or monochloro acetic acid amide, monochloro acetic acid alkyl amide or the like in polyphosphoric acid or concentrated sulfuric acid.

The organic dye or the like having -NH₂ or -NHR can be obtained, for example, by introducing a phthalimide group to the organic dye or the like, followed by hydrolysis.

Alternatively, the organic dye or the like can also be obtained by preparing an organic dye or the like having -CH₂Cl or -CH₂NHCOCH₂Cl and allowing to react the thus prepared organic dye or the like with a primary or secondary amino compound. R represents an alkyl group.

The organic dye or the like having -COOH, for example, copper phthalocyanine having -COOH group can be obtained by adding and reacting trimellitic acid anhydride or pyromellitic acid anhydride to a portion of phthalic acid anhydride used when synthesizing copper phthalocyanine.

The organic dye or the like having -OH can be obtained by diazotizing a hydroxyalkyl aniline having various functional groups and then coupling the same with various kinds of couplers, or by forming acetoacetic acid allylide derivative from a hydroxyalkyl aniline having various functional groups and then coupling the derivative with various kinds of couplers.

Alternatively, in a case of copper phthalocyanine, a copper phthalocyanine having -OH group can be obtained by heating chlorinated copper phthalocyanine under alkaline conditions.

The pigment dispersing agent according to the present invention has the organic dye or the like only at one terminal end or both terminal ends of the linear urethanic polymer.

At first, a linear urethanic polymer having at least one group selected from the group consisting of primary amino group, secondary amino group, hydroxy group and isocyanate group only at one terminal end or at both terminal ends is formed and then the primary amino group, secondary amino group, hydroxy group, or isocyanate group at one terminal end or at both terminal ends of the linear urethanic polymer is made to react with an organic dye or the like having at least one reactive group selected from the group consisting of -COCl, -SO₂Cl, -CH₂Cl, -CH₂NHCOCH₂Cl, -COOH, -NH₂, -NHR (R represents an alkyl group or a substituted alkyl group) and -OH, thereby obtaining a pigment dispersing agent having the organic dye or the like only at one terminal end or at both terminal ends of the linear urethanic polymer.

The number average molecular weight of the linear urethanic polymer having at least one group selected from the group consisting of the primary amino group, secondary amino group, hydroxy group or isocyanate group only at one terminal or at both terminal ends is preferably within a range from 2,000 to 100,000 and more preferably within a range from 5,000 to 50,000.

The urethanic pigment dispersing agent according to the present invention can be obtained by the three production processes as described below.

That is, a first method comprises allowing to react a dihydroxy compound having at least two hydroxy groups with a diisocyanate compound, thereby preparing an urethanic polymer containing a terminal isocyanate group or terminal isocyanate groups, and thereafter allowing to react the linear urethanic polymer with an organic dye or the like to which at least one reactive group selected from the group consisting of primary amino group, secondary amino group and hydroxy group is introduced.

A second method comprises allowing to react a dihydroxy compound with a diisocyanate compound to prepare a linear urethanic polymer containing a terminal isocyanate group or terminal isocyanate groups. Thereafter, the polymer is made to react with a diamine compound to prepare a linear urethanic polymer having a terminal amino group or terminal amino groups, and further
the resultant linear urethanic polymer is made to react with an organic dye or the like to which at least one reactive group selected from the group consisting of -COCl, -SO₂Cl, -CH₂Cl, -CH₂NHCOCH₂Cl and -COOH is introduced.

A third method comprises allowing to react a dihydroxy compound having at least two hydroxy groups with a diisocyanate compound, to prepare an urethanic polymer containing a terminal hydroxy group or terminal hydroxy groups. Thereafter, the linear urethanic polymer is made to react with an organic dye or the like, to which at least one reactive group selected from the group consisting of -COCl, -SO₂Cl, -CH₂Cl, -CH₂NHCOCH₂Cl and -COOH is introduced.

The linear urethanic polymer used in the present invention can be obtained by making to react a dihydroxy compound with a diisocyanate compound and, if necessary, further with a diamine compound as described above.

The dihydroxy compound usable herein can include water, low molecular weight glycols such as ethylene glycol, diethylene glycol, propylene glycol, butanediol, propanediol, 1,6-hexanediol, neopentyl glycol and cyclohexane dimethanol, and high molecular weight diols such as polyether diols and polyester diols, as well as bisphenols such as bisphenol A and bisphenol F, and glycols obtained by adding alkylene oxides such as ethylene oxide or propylene oxide to bisphenol A or bisphenol F.

The polyether diols can include, for example, polymers, copolymers or graft polymers of tetrahydrofuran, and alkylene oxide such as ethylene oxide, propylene oxide and butylene oxide, or polyether glycols obtained by condensation of hexanediol, methylhexanediol, heptanediol, octanediol or a mixture thereof, and propoxylated or ethoxylated polyether glycols.

The polyester diols can include, for example, polyester diols obtained by condensating reaction of saturated or unsaturated low molecular weight glycol such as ethylene glycol, propylene glycol, 1,3-butanediol, 1,4-butanediol, neopentyl glycol, hexanediol, methyl-1,5-pentanediol, octanediol, cyclohexanediol, 2-ethyl-1,3-hexanediol, bisphenol A, diethylene glycol, triethylene glycol or dipropylene glycol, with an aliphatic or aromatic dibasic acid or aromatic dibasic acid ester, polyester diols obtained by ring-opening polymerization of a cyclic ester compound such as ε-caprolacton, polycarbonate diols and silicone diols and, further, a hydroxy-terminated reaction product obtained by the reaction between one of them and a diisocyanate may also be used.

The diisocyanate compound usable herein can include diisocyanates such as tollylene diisocyanate, 4,4'-diphenyl methane diisocyanate, hexamethylene diisocyanate, xylylene diisocyanate, 1,5-naphthalene diisocyanate, isophorone diisocyanate, lysine diisocyanate, hydrogenated 4,4'-diphenyl methane diisocyanate, hydrogenated tollylene diisocyanate, or isocyanate adducts having a glycol or amine added to both terminal ends thereof, or a mixture thereof.

As the synthesis condition in the reaction between the dihydroxy compound and the diisocyanate compound, it is preferred to allow to react these compounds at a reaction temperature ranging from room temperature to 140^{o}C, preferably, from 40 to 100^{o}C. Further, the equivalent ratio of the isocyanate group to the hydroxy group is within a range from about 1.02 : 1 to about 2 : 1, preferably, within a range from about 1.05 : 1 to about 1.5 : 1. Further, if necessary, known urethanizing catalysts, for example, dibutyl tin dilaurate, tin octylate, triethylamine, N,N-dimethylbenzylamine, sodium hydroxide or diethyl zinc tetra(n-butoxy) titanium may be used. The reaction can be conducted without solvent but an organic solvent inert to the isocyanate can also be used for making the reaction uniform or controlling the viscosity. Such solvents include, for example, acetone, methyl ethyl ketone, ethyl acetate, dioxane, acetonitrile, tetrahydrofuran, diethyleneglycol dimethyl ether and N-methylpyrrolidone which may be used alone or as a mixture of them.

The diamine compound used for chain lengthening of the isocyanate-terminated urethanic polymer can include, those diamines such as ethylenediamine, trimethylenediamine, tetramethylenediamine, pentamethylenediamine, 1,7-diaminoheptane, 1,8-diaminooctane, xylylenediamine 1,4-diaminocyclohexane, isophoronediamine, phenylenediamine and polyamideamine or a reaction product having a terminal amino group obtained by reaction between the above-mentioned diamine and an organic diisocyanate compound.

In the step of chain lengthening of the isocyanate-terminated urethanic polymer with the diamine compound in the second method, the reaction can be conducted either by dropping a solution prepared by diluting a diamine compound with the inert organic solvent described above into the urethanic polymer containing a terminal isocyanate group or terminal isocyanate groups or by dropping a solution of the urethanic polymer containing terminal isocyanate group or terminal isocyanate groups into a solution of the diamine compound.

The amount of the diamine compound used is preferably within the range from 1 to 2 equivalent based on 1 equivalent amount of free isocyanate groups in the urethanic polymer containing a terminal isocyanate group or terminal isocyanate groups. The reaction can be carried out at a temperature between room temperature and about 90^{o}C according to reactivity of the compounds.

The reaction between the urethanic polymer having a terminal amino group or terminal amino groups which has a lengthened chain by the use of the diamine compound, the organic dye and/or heterocyclic compound having carboxylic group, -COCl group, -SO₂Cl group and the like is generally conducted by allowing to react in a reaction medium such as water, alcohol, acetone or N,N-dimethylformamide, optionally, in the presence of an alkali catalyst, and thereafter removing the solvent. However, in a case of an azo pigment, a method of effecting coupling after reacting an amine-terminated polymer to a diazo component or a coupler component in advance is industrially advantageous.

In a case of using a solvent for a non-aqueous resin described later, the following polar group may be incorporated into the polymer portion, that is, the linear urethanic polymer of the pigment dispersing agent according to the present invention. The polar group in the linear urethanic polymer may sometimes enhance the affinity between the pigment dispersing agent and the non-aqueous resin or the solvent, thereby improving the stability of the pigment dispersion.

The polar group-containing linear urethanic polymer is obtained by allowing to react a dihydroxy compound or a diamine compound having at least two functional groups capable of reacting with an isocyanate group and containing, as an essential component, a compound having at least one hydrophilic group such as -COOH, -COONa, -COONH₄, -SO₃H, -SO₃Na and -SO₃NH₄ in the molecule, with a diisocyanate compound.

For example, the compound having at least two functional groups capable of reacting with the isocyanate group and having at least one polar group as described above in the molecule can include dimethylol propionic acid, amino acid, amino sulfonic acid and oxyalkylation products and polyesterification products thereof, diamino carboxylic acid, sodium diamino benzene sulfonate, and disodium salt of glycerin monophosphate.

Dihydroxy compounds and diamine compounds having the above-described compounds as essential components are made to react with compounds having an isocyanate group to obtain a urethane polymer having a terminal isocyanate group at least one terminal end, a urethane polymer having a terminal amino group at least one terminal end or a urethane polymer having a terminal hydroxy group at least one terminal end, as described above. The isocyanate group, amino group or hydroxy group of the above urethane polymers is made to react with at least one reactive group selected from the group consisting of -COCl, SO₂, -CH₂Cl, -CH₂NHCOCH₂Cl, -COOH, -NH₂, -NHR (R represents an alkyl group or a substituted alkyl group) and -OH groups in the portion having a high affinity with pigments, so that the pigment dispersing agents can be obtained.

The pigment dispersing agent thus obtained contains a polar group in the polymer portion thereof so that the affinity between the non-aqueous resin having the highly polar group and the highly polar solvent can be enhanced by the polar group of the polymer.

Another type of the pigment dispersing agent according to the present invention has an organic dye or the like only at one terminal end at both terminal ends of the linear acrylic polymer, and it is only necessary that the dispersing agent is dissolved or dispersed in a pigment dispersion system after introduction of the organic dye or the like. The dispersing agent is obtained either by making to react a linear acrylic polymer having a terminal primary and/or a secondary amino group at least one terminal end, with an organic dye or the like having at least one reactive group selected from the group consisting of -COCl, -SO₂Cl, -CH₂Cl and -CH₂NHCOCH₂Cl, or by using an organic dye or the like having -SH as a chain transfer agent upon polymerizing a radical polymerizable unsaturated monomer.

The linear acrylic polymer having the terminal primary and/or the secondary amino group at least one terminal end is preferably a resin having a weight average molecular weight from 3,000 to 100,000 and an acid value from 1 to 100 obtained by polymerizing a monomer having a radical polymerizable unsaturated bond and it is only necessary that the polymer is dissolved or dispersed in a pigment dispersion system.

The monomer having the radical polymerizable unsaturated bond includes, for example, α,β-ethylenically unsaturated carboxylic acid such as acrylic acid, methacrylic acid crotonic acid, maleic acid, fumaric acid, citraconic acid or itaconic acid, and an unsaturated monomer having sulfonic group such as p-vinylbenzene sulfonic acid and 2-acrylamide propane sulfonic acid.

In this specification, monomers including acrylate and methacrylate, acrylamide and methacrylamide, and the like are represented by (meth)acrylate, (meth)acrylamide, and the like, respectively.

The example for the monomer containing a basic group includes, for example,
N,N-dimethylaminoethyl(meth)acrylate,
N,N-diethylaminoethyl(meth)acrylate,
N,N-dimethylaminoethyl(meth)acrylamide and
N,N-diethylaminoethyl(meth)acrylamide.

Examples of the monomers containing a hydroxy group include, for example, 2-hydroxyethyl-(meth)acrylate or hydroxypropyl(meth)acrylate.

Examples of other monomers, alkyl (meth)acrylate and vinyl aromatic compounds, etc. can be used, more specifically examples of the alkyl(meth)acrylate include, for example, methyl(meth)acrylate, ethyl(meth)acrylate, propyl(meth)acrylate, butyl(meth)acrylate, hexyl(meth)acrylate, 2-ethylhexyl(meth)acrylate and lauryl(meth)acrylate. Examples of the vinyl aromatic compound include, for example, styrene, α-methylstyrene, styrene sulfonic acid, vinyltoluene and p-chlorostyrene. In addition, acrylonitrile, vinyl acetate, etc. can also be used.

In a case of using a nitrogen-containing monomer, the monomer must be selected in light of the reactivity of the monomer with the terminal amino group.

The linear acrylic polymer having terminal primary and/or secondary amino group at least one terminal end can be obtained, for example, by using 2-aminoethyl mercaptan or the like having -SH as a chain transfer agent upon polymerization.

The radical polymerization of the monomer can be carried out by a known method, for example, at a reaction temperature about from 50^{o}C to 220^{o}C and using a polymerization solvent, for example, a cellosolve solvent, carbitol solvent, ethyleneglycol dialkylene ether solvent, cellosolve - acetate solvent, alcohol solvent, aromatic hydrocarbon solvent, ketone solvent, ether solvent or water which may be used alone or as a mixture of them.

The organic dye or the like and the acrylic polymer may be coupled by making to react -COCl, -SO₃Cl, etc. of the organic dye or the like with an primary amino group or a secondary amino group in the linear acrylic polymer in a reaction solvent such as water, alcohol, acetone or N,N-dimethylformamide, in the presence of an alkali catalyst, as occasion demands, followed by removing the solvent. In case of an azo pigment, a method of previously allowing to react a terminal primary amino group or secondary amino group of the polymer with a diazo component or a coupler component, followed by coupling is industrially advantageous.

Since -COCl or -SO₂Cl is highly reactive as compared with carboxylic group or sulfonic group, reaction with an amino group or the like can be conducted under more moderate condition and an aimed product can be obtained in a high yield, so that the use of such groups is industrially excellent.

Further, the non-aqueous type pigment dispersing agent according to the present invention in which the organic dye or the like is coupled to at least one of the both terminal ends of the linear acrylic polymer can also be obtained by using the organic dye or the like having -SH as a chain transfer agent upon polymerization of the radical polymerizable unsaturated monomer described above.

The organic dye having -SH can include, for example, mercapto copper phthalocyanine, mercaptoanthraquinone, mercaptoacridone, mercaptoquinacridone, mercaptodioxazine, mercaptodiketopyrrolopyrrole, mercaptoanthrapyridine, mercaptoanthanthrone, mercaptoindanthrone, mercaptoflavanthrone, mercaptoperinone, mercaptoperylene, mercaptothioindigo, mercaptoisoindolinone and mercaptobenzimidazolone, or mercaptoanthraquinone and mercaptoacridone.

The organic dye or the like having -SH described above is available as commercial products and, as well as, may be obtained by allowing to react, for example, 2-aminoethyl mercaptane with an organic dye or the like having at least one reactive group selected from the group consisting of -COCl, -SO₂Cl, -CH₂Cl and -CH₂NHCOCH₂Cl, thereby introducing -SH into the organic dye or the like.

The pigment dispersing agent according to the present invention exhibits an excellent dispersing effect for commercially available pigments. The pigment dispersing agent can be applicable, for example, to organic pigments such as azo pigments including soluble or insoluble azo pigments or condensate azo pigments, phthalocyanine pigments, quinacridone pigments, isoindolinone pigments, perylene and perinone pigments, dioxazine pigments, anthraquinone pigments, diketopyrrolopyrrole pigments, anthrapyrimidine pigments, anthanthrone pigments, indanthrone pigments, flavanthrone pigments and thioindigo pigments, as well as inorganic pigments such as carbon black, titanium oxide, yellow lead, cadmium yellow, cadmium red, red iron oxide, black iron oxide, zinc white, Prussian blue or ultramarine blue.

The pigment composition according to the present invention comprises the pigment dispersing agent according to the present invention and the pigment as described above. The blending ratio of the pigment dispersing agent according to the present invention to the pigment is preferably from 0.5 to 100 parts by weight based on 100 parts by weight of the pigment. If the ratio is less than 0.5 parts by weight, it is not preferred since the pigment dispersing effect is not sufficient. Further, even if it is used in excess of 100 parts by weight, no more effect can be expected for the excess portion used.

The pigment dispersion according to the present invention comprises the pigment dispersing agent according to the present invention described above, a pigment and a non-aqueous type resin.

The non-aqueous type resin used in the present invention can include, for example, lime rosin varnish, polyamide resin, vinyl chloride resin, nitrocellulose lacquer used for air dry coating or baking paint amino alkyd resin, acrylic lacquer amino acrylic resin and urethanic resin paint.

The amount of the non-aqueous type resin used is preferably from 5 to 500 parts by weight as a solid based on 100 parts by weight of a pigment. Particularly, in case that the non-aqueous type resin is used for concentrated dispersion, the resin is preferably from 5 to 200 parts by weight as a solid based on 100 parts by weight of the pigment. In case that the resin is used for paint or printing ink, the resin is preferably from 100 to 500 parts by weight as the solid based on 100 parts by weight of the pigment. If the resin is less than 5 parts by weight based on 100 parts by weight of the pigment, the pigment is less dispersible. On the other hand, if it is more than 500 parts by weight, since coloring is insufficient, it is not sometimes suitable to the use as paint or printing ink. In the case of use as paint or printing ink, a curing agent resin such as a melamine resin, a curing catalyst or a surface active agent may be added.

In the non-aqueous pigment dispersion according to the present invention, the non-aqueous type pigment dispersing agent is preferably from 0.5 to 100 parts by weight based on 100 parts by weight of the pigment. If the dispersing agent is less than 0.5 parts by weight, it is not preferred since the effect of dispersing the pigment is insufficient. On the other hand, even if it is used in excess of 100 parts by weight, no more effect can be expected for the excess portion.

The non-aqueous pigment dispersion according to the present invention can be prepared by the method as described below.
1. Adding and dispersing a pigment composition obtained by previously mixing a pigment and a non-aqueous type pigment dispersing agent into a non-aqueous vehicle (that is, non-aqueous resin and solvent).
2. Adding and dispersing a pigment and a non-aqueous type pigment dispersing agent to a non-aqueous vehicle.
3. Dispersing a pigment and a non-aqueous type pigment dispersing agent separately into a non-aqueous vehicle in advance and mixing the resultant dispersions.
4. After dispersing a pigment in a non-aqueous vehicle, adding a non-aqueous type pigment dispersing agent to the resultant non-aqueous pigment dispersion, and the aimed effect can be obtained by any of the methods.

For the method of preparing the pigment composition,although a sufficient dispersing effect can be obtained by merely mixing a pigment powder and the non-aqueous type pigment dispersing agent according to the present invention described above, a further preferred effect can be obtained by a precise mixing method, for example, of mechanically mixing by using a kneader, roll, attritor, supermill, or various kinds of pulverizers and dispersers, adding a solution containing a non-aqueous type pigment dispersing agent according to the present invention to a suspension system of the pigment in water or organic solvent, thereby depositing the pigment dispersing agent onto the surface of the pigment, or co-dissolving an organic pigment and a pigment dispersing agent together with a solvent having a strong dissolving power such as sulfuric acid and then coprecipitating them with a poor solvent such as water.

For dispersing or mixing the pigment or the pigment dispersing agent into a non-aqueous vehicle or solvent, it is preferred to use a dispersing apparatus such as a dissolver, high speed mixer, homomixer, kneader, roll mill, sand mill or attritor.

### (Examples)

The present invention will be explained with reference to examples. In the examples, "part" and "%" represent, respectively, "part by weight" and "% by weight", respectively.

### Preparation Example 1

### (Reaction of isocyanate-terminated urethane polymer with organic dye or the like having -CH₂NH₂)

To a four-necked flask equipped with a thermometer, a stirrer and a reflux cooling tube, were charged 266 parts of polypropylene glycol ethylene oxide adduct (hydroxyl value: 53 mg KOH/g), 200 parts of N-methylpyrrolidone and 0.075 parts of tin octylate and heated at 80^{o}C with stirring under a nitrogen atmosphere. After refluxing for one hour, 31 parts of isophorone diisocyanate were added thereto and reacted at the same temperature for 4 hours to obtain a solution of an isocyantate-terminated polymer. The polymer had a number average molecular weight of 20,000.

To the solution of the isocyanate-terminated polymer,were charged 360 parts of N-methylpyrrolidone and 25.4 parts of aminomethyl copper phthalocyanine and were allowed to react at 80^{o}C for 4 hours. Unreacted components and the solvent were removed to obtain a paste containing 225 parts of compound (1).

### Preparation Example 2

### (Reaction of amine-terminated urethane polymer with organic dye or the like having -COOH)

To a four-necked flask equipped with a thermometer, a stirrer and a reflux cooling tube, were charged 256 parts of polypropylene glycol ethylene oxide adduct (hydroxyl value: 53 mg KOH/g), 200 parts of N-methylpyrrolidone and 0.075 parts of tin octylate and heated at 80^{o}C with stirring under a nitrogen atmosphere. After refluxing for one hour, 36 parts of isophorone diisocyanate were added thereto and allowed to react at the same temperature for 4 hours. Further, the reaction solution was cooled to 40^{o}C, and 456 parts of the prepolymer solution were dropped in a mixed solution of 8.0 parts of isophoronediamine and 160 parts of N-methylpyrrolidone, then they were reacted further for 2 hours at 60^{o}C to obtain an amine-terminated polymer. The polymer had a number average molecular weight of 30,000.

To the solution of the amine-terminated polymer, were added 360 parts of N-methylpyrrolidone, 85 parts of triethyl-amine and 17.0 parts of copper phthalocyanine carboxylic acid (containing carboxyl groups by the number of 1.2 in average per one molecule) and allowed to react under reflux for 2 hours. Unreacted components and the solvent were removed to obtain a paste containing 200 parts of compound (2).

### Preparation Example 3

### (Reaction of amine-terminated urethane polymer with organic dye or the like having -COOH)

To a four-necked flask equipped with a thermometer, a stirrer and a reflux cooling tube, were charged 200 parts of polypropylene glycol (hydroxyl value; 53 mg KOH/g), 22 parts of dimethylol propionic acid, 200 parts of N-methylpyrrolidone and 0.075 parts of tin octylate and heated at 80^{o}C with stirring under a nitrogen atmosphere. After refluxing for one hour, 73 parts of isophorone diisocyanate were added and allowed to react at the same temperature for 4 hours. Further, the reaction solution was cooled to 40^{o}C, and 479 parts of the prepolymer solution were dropped in a mixed solution of 13 parts of isophoronediamine and 180 parts of N-methylpyrrolidone, then they were reacted further for 2 hours at 60^{o}C to obtain an amine-terminated polymer. The polymer had a number average molecular weight of 23,000 and an acid value of 30 mg KOH/g.

To the solution of the amine-terminated polymer, were added 400 parts of N-methylpyrrolidone, 7.7 parts of triethylamine and 24.3 parts of copper phthalocyanine carboxylic acid (containing carboxyl groups by the number of 1.2 in average per one molecule) were added and made to react under reflux for 2 hours. Unreacted components and the solvent were removed to obtain a paste containing 224 parts of compound (3).

### Preparation Example 4

### (Reaction of isocyanate-terminated urethane polymer with organic dye or the like having -CH₂NH₂)

After synthesis in the same procedure as in Preparation Example 1 except for replacing 25.4 parts of aminomethyl copper phthalocyanine with 14.3 parts of aminomethyl quinacridone, unreacted components and the solvent were removed, to obtain a paste containing 218 parts of compound (4).

### Preparation Example 5

### (Reaction of isocyanate-terminated urethane polymer with organic dye or the like having -NH₂)

After synthesis in the same procedure as in Preparation Example 1 except for replacing 25.4 parts of aminomethyl copper phthalocyanine with 9.4 parts of 2-aminoanthraquinone, unreacted components and the solvent were removed, to obtain a paste containing 214 parts of compound (5).

### Preparation Example 6

### (Reaction of amine-terminated urethane polymer with organic dye or the like having -COOH)

After synthesis in the same procedure as in Preparation Example 2 except for replacing 17.0 parts of copper phthalocyanine carboxylic acid with 10.4 parts of quinacridone carboxylic acid (containing carboxyl groups by the number of 1.5 in average per one molecule), unreacted components and the solvent were removed, to obtain a paste containing 192 parts of compound (6).

### Preparation Example 7

### (Reaction of amine-terminated urethane polymer with organic dye or the like having -COOH)

After synthesis in the same procedure as in Preparation Example 2 except for replacing 17.0 parts of copper phthalocyanine carboxylic acid with 6.8 parts of acridone-2-carboxylic acid, unreacted components and the solvent were removed, to obtain a paste containing 193 parts of compound (7).

### Preparation Example 8

### (Reaction of amine-terminated urethane polymer with organic dye or the like having -COOH)

After synthesis in the same procedure as in Preparation Example 3 except for replacing 24.3 parts of copper phthalocyanine carboxylic acid with 14.7 parts of quinacridone carboxylic acid (containing carboxyl groups by the number of 1.5 in average per one molecule), unreacted components and the solvent were removed, to obtain a paste containing 212 parts of compound (8).

### Preparation Example 9

### (Reaction of amine-terminated urethane polymer with organic dye or the like having -COOH)

After synthesis in the same procedure as in Preparation Example 3 except for replacing 24.3 parts of copper phthalocyanine carboxylic acid with 25.9 parts of dioxazine carboxylic acid (containing carboxyl groups by the number of 1.7 in average per one molecule), unreacted components and the solvent were removed, to obtain a paste containing 214 parts of compound (9).

### Preparation Example 10

### (Reaction of amine-terminated urethane polymer with organic dye or the like having -COOH)

After synthesis in the same procedure as in Preparation Example 3 except for replacing 24.3 parts of copper phthalocyanine carboxylic acid with 9.8 parts of anthraquionone-2-carboxylic acid, unreacted components and the solvent were removed, to obtain a paste containing 212 parts of compound (10).

### Preparation Example 11

After condensating the amine-terminated polymer obtained in Preparation Example 3 and p-nitrobenzoic acid in a customary manner, the nitro group was reduced to an amino group. The polymer having the amino group was diazotized with sodium nitrite. The compound (a) and the following compound (b) were coupled by a customary method, and unreacted components and the solvent were removed, to obtain a paste containing compound (11). The flowchart for synthesis is shown below.

### Preparation Example 11.

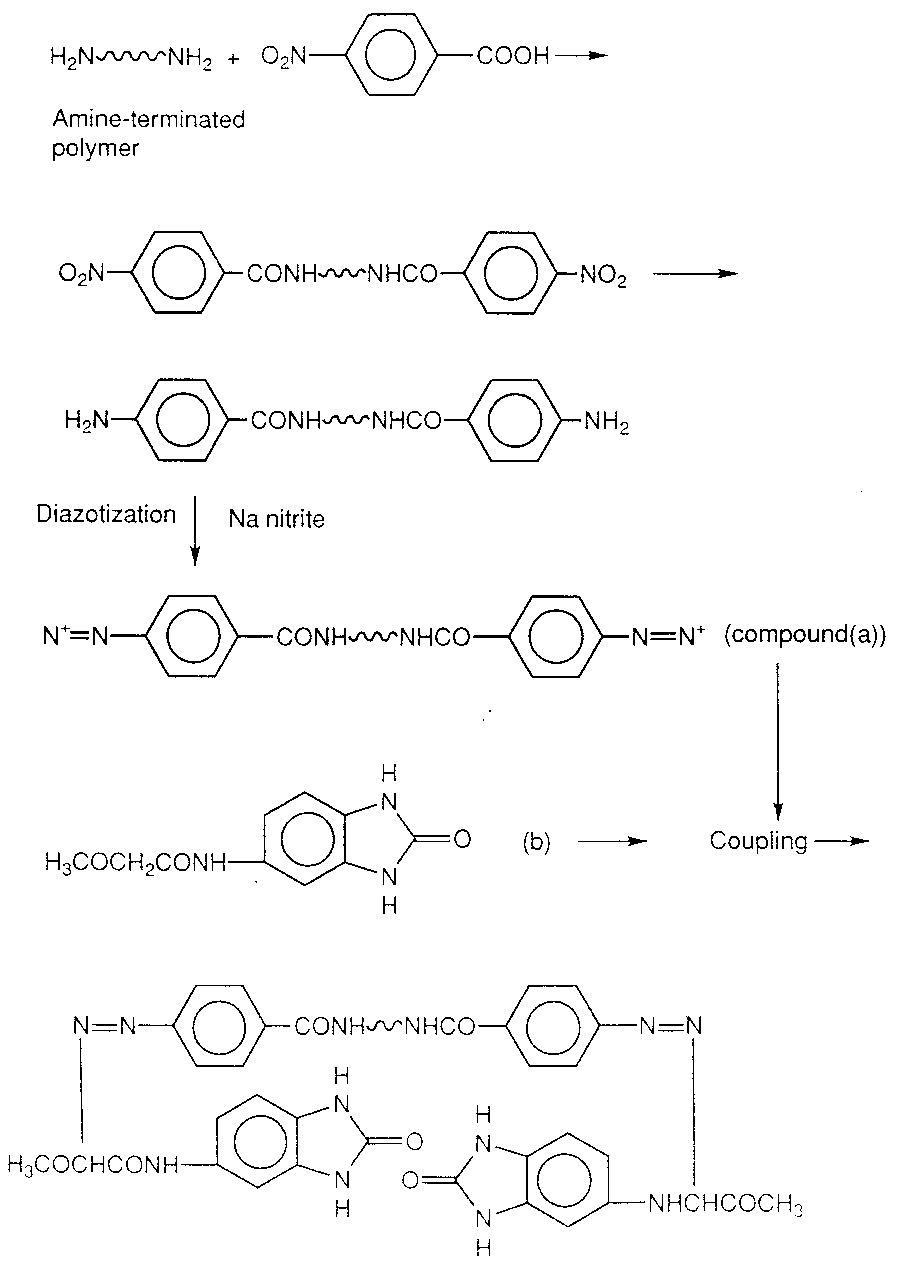

### Preparation Example 12

### (Reaction of -OH-terminated urethane polymer with organic dye or the like having -COOH)

To a four-necked flask equipped with a thermometer, a stirrer and a reflux cooling tube, were charged 200 parts of polypropylene glycol (hydroxyl value: 55 mg KOH/g), 18.7 parts of dimethylol propionic acid, 200 parts of N-methylpyrrolidone, and 0.075 parts of tin octylate and heated at 80^{o}C with stirring in a nitrogen atmosphere. After refluxing for one hour, 42.3 parts of isophorone diisocyanate were added and allowed to react at the same temperature for 4 hours, to obtain a hydroxyl-terminated polymer solution. The polymer had a number average molecular weight of 6,000 and an acid value of 30 mg KOH/g.

To the solution of the hydroxyl-terminated polymer, were added 400 parts of N-methylpyrrolidone and 22.2 parts of copper phthalocyanine carboxylic acid (containing carboxyl groups by the number of 1.2 in average per one molecule) and allowed to react under reflux for 2 hours. Unreacted components and the solvent were removed to obtain a paste containing 226 parts of compound (12).

### Preparation Example 13

### (Reaction of isocyanate-terminated urethane polymer with organic dye or the like having -OH)

After synthesis in the same procedure as in Preparation Example 1 except for replacing 25.4 parts of aminomethyl copper phthalocyanine with 24.9 parts of hydroxy copper phthalocyanine, unreacted components and the solvent were removed, to obtain a paste containing 224 parts of compound (13).

### Preparation Example 14

### (Reaction of amine-terminated urethane polymer with organic dye or the like having -CH₂Cl)

After synthesis in the same procedure as in Preparation Example 2 except for replacing 17.0 parts of copper phthalocyanine carboxylic acid with 16.9 parts of chloromethyl copper phthalocyanine, unreacted components and the solvent were removed, to obtain a paste containing 203 parts of compound (14).

### Preparation Example 15

### (Reaction of amine-terminated urethane polymer with organic dye or the like having -SO₂Cl)

After synthesis in the same procedure as in Preparation Example 3 except for replacing 24.3 parts of copper phthalocyanine carboxylic acid with 26.8 parts of copper phthalocyanine sulfonyl chloride (containing chlorosulfonyl group by the number of 1.2 in average per one molecule), unreacted components and the solvent here removed, to obtain a paste containing 212 parts of compound (15).

### Preparation Example 16

### (Reaction of amine-terminated urethane polymer with organic dye or the like having -CH₂NHCOCH₂Cl)

After synthesis in the same procedure as in Preparation Example 2 except for replacing 17.0 parts of copper phthalocyanine carboxylic acid with 9.8 parts of chloro acetic acid amidomethyl quinacridone (containing chloro acetic acid amidemethyl group by the number of 1.7 in average per one molecule), unreacted components and the solvent were removed, to obtain a paste containing 193 parts of compound (16).

### Preparation Example 17

### (Reaction of amine-terminated urethane polymer with organic dye or the like having -COCl)

After synthesis in the same procedure as in Preparation Example 2 except for replacing 17.0 parts of copper phthalocyanine carboxylic acid with 7.3 parts of acridone-2-carbonyl chloride, unreacted components and the solvent were removed, to obtain a paste containing 196 parts of compound (17).

### Preparation Example 18

### (Reaction of amine-terminated urethane polymer with organic dye or the like having -SO₂Cl)

After synthesis in the same procedure as in Preparation Example 3 except for replacing 24.3 parts of copper phthalocyanine carboxylic acid with 17.9 parts of quinacridone sulfonyl chloride (containing chloro sulfonyl group by the number of 1.5 in average per one molecule), unreacted components and the solvent were removed, to obtain a paste containing 218 parts of compound (18).

### Preparation Example 19

### (Reaction of amine-terminated urethane polymer with organic dye or the like having -SO₂Cl)

After synthesis in the same procedure as in Preparation Example 3 except for replacing 24.3 parts of copper phthalocyanine carboxylic acid with 29.5 parts of dioxazine sulfonyl chloride (containing chloro sulfonyl group by the number of 1.7 in average per one molecule), unreacted components and the solvent were removed, to obtain a paste containing 220 parts of compound (19).

### Preparation Example 20

### (Reaction of amine-terminated urethane polymer with organic dye or the like having -COCl)

After synthesis in the same procedure as in Preparation Example 3 except for replacing 24.3 parts of copper phthalocyanine carboxylic acid with 10.5 parts of anthraquinone-2-carbonyl chloride, unreacted components and the solvent were removed, to obtain a paste containing 215 parts of compound (20).

### Preparation Example 21

After condensating the amine-terminated polymer obtained in Preparation Example 3 and p-nitrobenzoyl chloride in a customary method, nitro group was reduced to an amino group. A polymer having the amino group was diazotized with sodium nitrite to obtain compound (c). The resultant compound and the compound (b) as described in Preparation Example 11 were coupled by a customary method and unreacted components and the solvent were removed to obtain a paste containing compound (21). The flowchart of the synthesis procedure is shown below.

### Preparation Example 21.

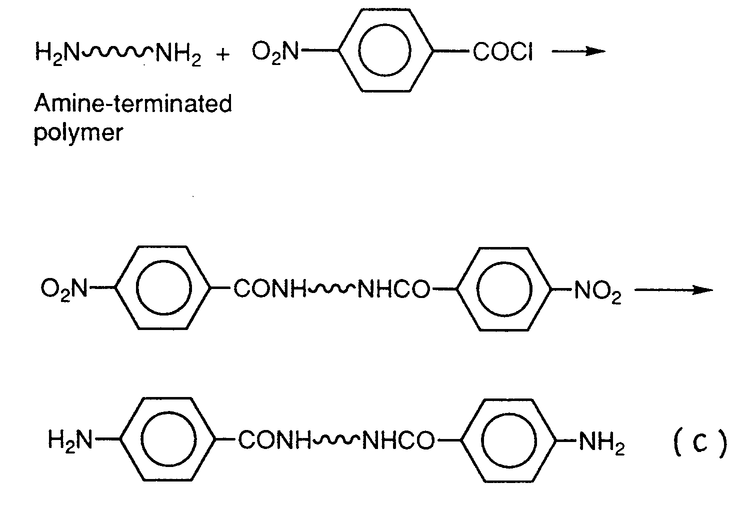

Diazotization and coupling were conducted in the same manner as those in Preparation Example 11.

### Preparation Example 22

### (Reaction of amine-terminated acryl polymer with organic dye or the like having -CH₂Cl)

To a four-necked flask equipped with a thermometer, a stirrer, a refluxing cooling tube and a nitrogen gas introduction tube, were charged 350 parts of toluene and heated to 100^{o}C. Thereafter, a mixture comprising:

| | |
|---|---|
| Acrylic acid | 3 parts |
| Ethyl acrylate | 113 parts |
| Methyl methacrylate | 101 parts |
| Vinyl acetate | 25 parts |
| and a mixture comprising: | |
| AIBN (manufactured by Otsuka Chemical) | 4 parts |
| 2-aminoethyl mercaptan | 5 parts |
| Toluene | 50 parts |

were dropped over a 2 hour period while introducing nitrogen gas. Further, the mixture was made to react for 2 hours while being kept at the same temperature to obtain a solution of a primary amino group-terminated polymer. The polymer had a weight average molecular weight of 5,000 and an acid value of 10 mg KOH/g.

Further, 300 parts of toluene and 19.5 parts of triethylamine were added to form a mixture, to which 60.9 parts of chloromethyl copper phthalocyanine were added and made to react at 80^{o}C for 2 hours. Unreacted components and the solvent were removed, to obtain a paste containing 132 parts of compound (22).

### Preparation Example 23

### (Reaction of amine-terminated acryl polymer with organic; dye or the like having -SO₂Cl)

To a four-necked flask equipped with a thermometer, a stirrer, a refluxing cooling tube and a nitrogen gas introduction tube, were charged 350 parts of toluene and heated to 60^{o}C. Thereafter, a mixture comprising:

| | |
|---|---|
| Acrylic acid | 10 parts |
| Ethyl acrylate | 113 parts |
| Methyl methacrylate | 101 parts |
| Vinyl acetate | 25 parts |
| and a mixture comprising: | |
| AIBN (manufactured by Otsuka Chemical) | 2 parts |
| 2-aminoethyl mercaptan | 2.6 parts |
| Toluene | 50 parts |

were dropped over a 2 hour period while introducing nitrogen gas. Further, the mixture was made to react for 2 hours while being kept at the same temperature to obtain a solution of a primary amino group-terminated polymer. The polymer had a weight average molecular weight of 11,000 and an acid value of 30 mg-KOH/g.

Further, 300 parts of toluene and 10.2 parts of triethylamine were added to form a mixture, to which 29.6 parts of copper phthalocyanine sulfonyl chloride (containing chloro sulfonyl group by the number of 1.2 in average per molecule) were added and made to react at 80^{o}C for 2 hours. Unreacted components and the solvent were removed, to obtain a paste containing 205 parts of compound (23).

### Preparation Example 24

### (Reaction of amine-terminated acryl polymer with organic dye or the like having -CH₂Cl)

After synthesis in the same procedures as those in Preparation Example 22 except for replacing 60.9 parts of chloromethyl copper phthalocyanine with 35.4 parts of chloromethyl quinacridone, unreacted components and the solvent were removed, to obtain a paste containing 199 parts of compound (24).

### Preparation Example 25

### (Reaction of amine-terminated acryl polymer with organic dye or the like having -COCl)

After synthesis in the same procedure as in Preparation Example 22 except for replacing 60.9 parts of chloromethyl copper phthalocyanine with 26.3 parts of anthraquinone-2-carbonyl chloride, unreacted components and the solvent were removed, to obtain a paste containing 203 parts of a compound (25).

### Preparation Example 26

### (Reaction of amine-terminated acryl polymer with organic dye or the like having -SO₂Cl)

After synthesis in the same procedure as in Preparation Example 23 except for replacing 29.6 parts of copper phthalocyanine sulfonyl chloride with 15.6 parts of quinacridone sulfonyl chloride (containing chloro sulfonyl group by the number of 1.5 in average per one molecule), unreacted components and the solvent were removed, to obtain a paste containing 209 parts of compound (26).

### Preparation Example 27

### (Reaction of amine-terminated acryl polymer with organic dye or the like having -SO₂Cl)

After synthesis in the same procedure as in Preparation Example 23 except for replacing 29.6 parts of copper phthalocyanine sulfonyl chloride with 22.8 parts of dioxazine sulfonyl chloride (containing chloro sulfonyl group by the number of 1.7 in average per one molecule), unreacted components and the solvent were removed, to obtain a paste containing 202 parts of compound (27).

### Preparation Example 28

### (Reaction of amine-terminated acryl polymer with organic dye or the like having -COCl)

After synthesis in the same procedure as in Preparation Example 23 except for replacing 29.6 parts of copper phthalocyanine sulfonyl chloride with 13.8 parts of anthraquinone-2-carbonyl chloride, unreacted components and the solvent were removed, to obtain a paste containing 229 parts of compound (28).

### Preparation Example 29

To a solution containing 100 parts of the primary amine-terminated polymer prepared in Preparation Example 23 were added 400 parts of water, and the solvent was replaced with water to form a liquid suspension, to which 5.6 parts of acetoacetyl amino benzene sulfonyl chloride were added. The thus obtained compound and a diazonium solution formed by diazotizing 3,3-dichlorobenzidine by a customary method were subjected to coupling by a customary method and unreacted components were removed, to obtain a paste containing 159 parts of compound (29).

### Preparation Example 30

After synthesis in the same procedure as in Preparation Example 23 except for replacing 5 parts of 2-aminoethyl mercaptan with 25 parts of mercaptoanthraquinone, unreacted components and the solvent were removed, to obtain a paste containing 248 parts of compound (30).

### Preparation Example 31

After synthesis in the same procedure as in Preparation Example 23 except for replacing 2.6 parts of 2-aminoethyl mercaptan with 8.1 parts of mercaptoanthraquinone, unreacted components and the solvent were removed, to obtain a paste containing 233.2 parts of compound (31).

### Preparation Example 32

After polymerization in the same procedure as in Preparation Example 22 except for replacing 5 parts of 2-aminoethyl mercaptan with 35.8 parts of mercaptoquinacridone, unreacted components and the solvent were removed, to obtain a paste containing 250 parts of compound (32).

### Preparation Example 33

After polymerization in the same procedure as in Preparation Example 22 except for replacing 5 parts of 2-aminoethyl mercaptan with 63.3 parts of mercapto copperphthalocyanine, unreacted components and the solvent were removed, to obtain a paste containing 278 parts of compound (33).

### Preparation Example 34

After polymerization in the same procedure as in Preparation Example 23 except for replacing 2.6 parts of 2-aminoethyl mercaptan with 10.5 parts of mercaptoquinacridone, unreacted components and the solvent were removed, to obtain a paste containing 235 parts of compound (34).

### Preparation Example 35

After polymerization in the same procedure as in Preparation Example 23 except for replacing 2.6 parts of 2-aminoethyl mercaptan with 20.5 parts of mercapto copper phthalocyanine, unreacted components and the solvent were removed, to obtain a paste containing 244 parts of compound (35).

### Preparation Example 36

After polymerization in the same procedure as in Preparation Example 23 except for replacing 2.6 parts of 2-aminoethyl mercaptan with 21.0 parts of mercapto dioxazine, unreacted components and the solvent were removed, to obtain a paste containing 245 parts of compound (36).

Preparation Examples 1 - 36 are collectively shown as in Tables 1 and 2.

**Table 1**

| Non-aqueous Type Pigment Dispersing Agent (urethanic) | | | | |
|---|---|---|---|---|
| Compound (Pigment dispersing agent) | Polymer Portion | | | Organic Dyestuff |
| | Terminal | Skeleton | Mn | |
| 1 | -NCO | Urethane | 20000 | CuPc-CH₂NH₂ |
| 2 | -NH₂ | ↑ | 30000 | CuPc-COOH |
| 3 | -NH₂ | ↑ | 23000 | CuPc-COOH |
| 4 | -NCO | ↑ | 20000 | QRN-CH₂NH₂ |
| 5 | -NCO | ↑ | ↑ | AQN-NH₂ |
| 6 | -NH₂ | ↑ | 30000 | QRN-COOH |
| 7 | -NH₂ | ↑ | ↑ | Acridone-COOH |
| 8 | -NH₂ | ↑ | 23000 | QRN-COOH |
| 9 | -NH₂ | ↑ | ↑ | Dioxazine-COOH |
| 10 | -NH₂ | ↑ | ↑ | AQN-COOH |
| 11 | -NH₂ | ↑ | ↑ | Dis-azo-COOH |
| 12 | -OH | ↑ | 6000 | CuPc-COOH |
| 13 | -NCO | ↑ | 20000 | CuPc-OH |
| 14 | -NH₂ | ↑ | 30000 | CuPc-CH₂Cl |
| 15 | -NH₂ | ↑ | 23000 | CuPc-SO₂Cl |
| 16 | -NH₂ | ↑ | ↑ | QRN-CH₂NHCOCH₂Cl |
| 17 | -NH₂ | ↑ | ↑ | Acridone-COCl |
| 18 | -NCO | ↑ | 30000 | QRN-SO₂Cl |
| 19 | -NH₂ | ↑ | ↑ | Dioxazine-SO₂Cl |
| 20 | -NH₂ | ↑ | ↑ | AQN-COCl |
| 21 | -NCO | ↑ | ↑ | Dis-azo-SO₂Cl |

**Table 2**

| Non-aqueous Pigment Dispersing Agent (acrylic) | | | | |
|---|---|---|---|---|
| Compound (Pigment dispersing agent) | Polymer Portion | | | Organic Dyestuff |
| | Terminal | Skeleton | Mn | |
| 22 | -NH₂ | Acryl | 5000 | CuPc-CH₂Cl |
| 23 | -NH₂ | ↑ | 11000 | CuPc-SO₂Cl |
| 24 | -NH₂ | ↑ | 5000 | QRN-CH₂Cl |
| 25 | -NH₂ | ↑ | 5000 | AQN-COCl |
| 26 | -NH₂ | ↑ | 11000 | QRN-SO₂Cl |
| 27 | -NH₂ | ↑ | ↑ | Dioxazine-SO₂Cl |
| 28 | -NH₂ | ↑ | ↑ | AQN-COCl |
| 29 | -NH₂ | ↑ | ↑ | Dis-azo-SO₂Cl |
| 30 | ― | ↑ | 4000 | AQN-SH |
| 31 | ― | ↑ | 10000 | AQN-SH |
| 32 | ― | ↑ | 4000 | QRN-SH |
| 33 | ― | ↑ | 4000 | CuPc-SH |
| 34 | ― | ↑ | 10000 | QRN-SH |
| 35 | ― | ↑ | 10000 | CuPc-SH |
| 36 | ― | ↑ | 10000 | Dioxazine-SH |

### Examples 1 - 66, Comparative Examples 1 - 7

As shown in Table 3, pigments, compounds (1) - (36) synthesized in Preparation Examples, alkyd resin ("Phthalkyd 133-60", manufactured by Hitachi Kasei Kogyo K.K.) and xylene were blended and dispersed, and then melamine resin ("UVAN 20SE60", manufactured by Mitsui Cytec Ltd.) were blended to obtain amino alkyd paints.

The viscosity of each of the paints was measured, and the paints according to the present invention showed low thixotropic property (TI value) and excellent flowability compared with comparative examples as shown in Table 3.

Further, the paints were adjusted for the viscosity to 20 seconds by Ford cup #4, and coated on an intermediate coated plate (a steel sheet previously coated with primer paint and subjected to wet rubbing by an air spray to form a dry film of about 30 µm in thickness, and baked at 140^{o}C for 30 minutes after being permitted to stand for 10 minutes. As shown in Table 3, the coated articles according to the present invention were excellent also in the gloss of the coated film compared with that of comparative examples.

Further, non-agglomerating properties and non-crystallizing property were evaluated on the basis of the stability of color segregation which causes particular practical problems.

The paint was cut with a titanium oxide-base paint such that the pigment: titanium oxide ratio was 1/10 to prepare tinted paint. Then, the paint was diluted with xylene and after controlling the viscosity, injected into a test tube and the change on the glass wall surface was observed, the paint according to the present invention showed less color segregation with the lapse of time compared with those of Comparative Examples.

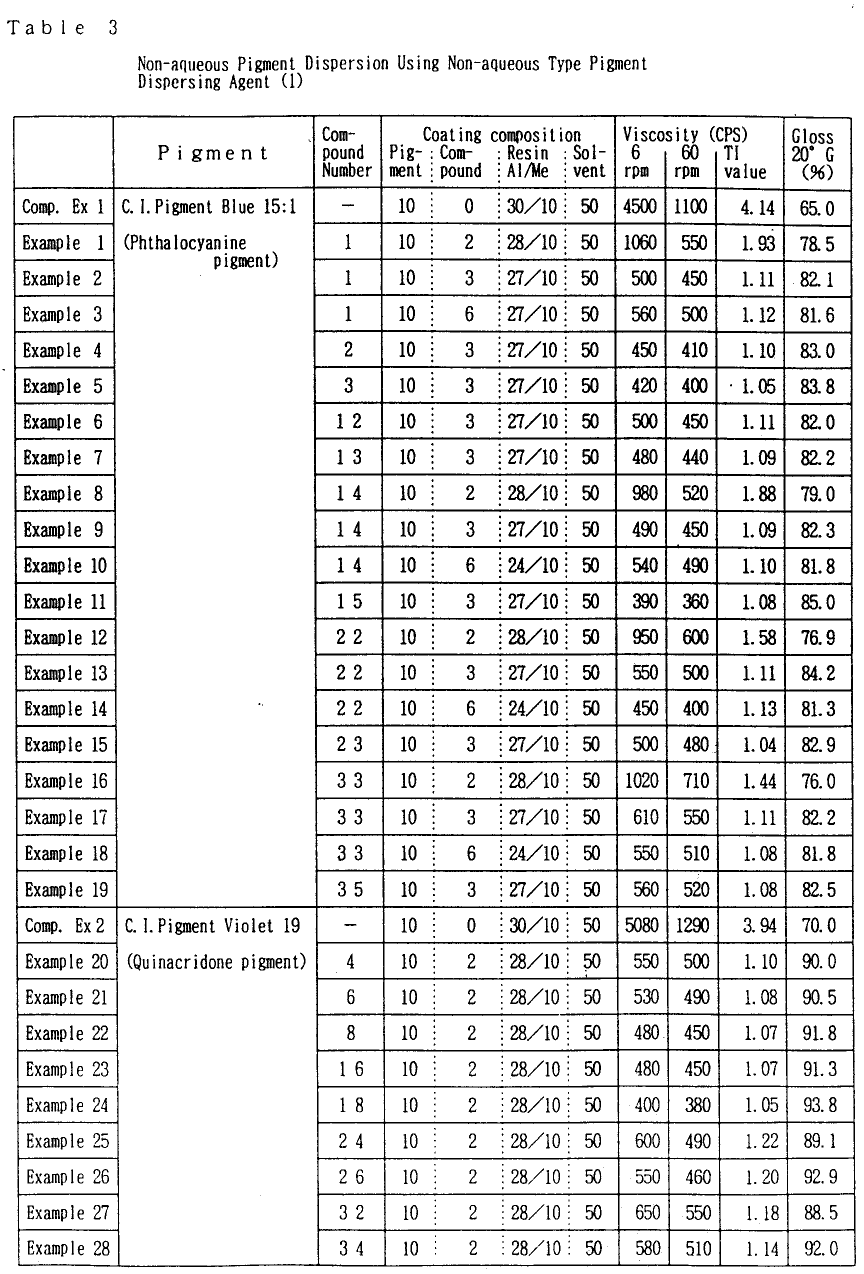

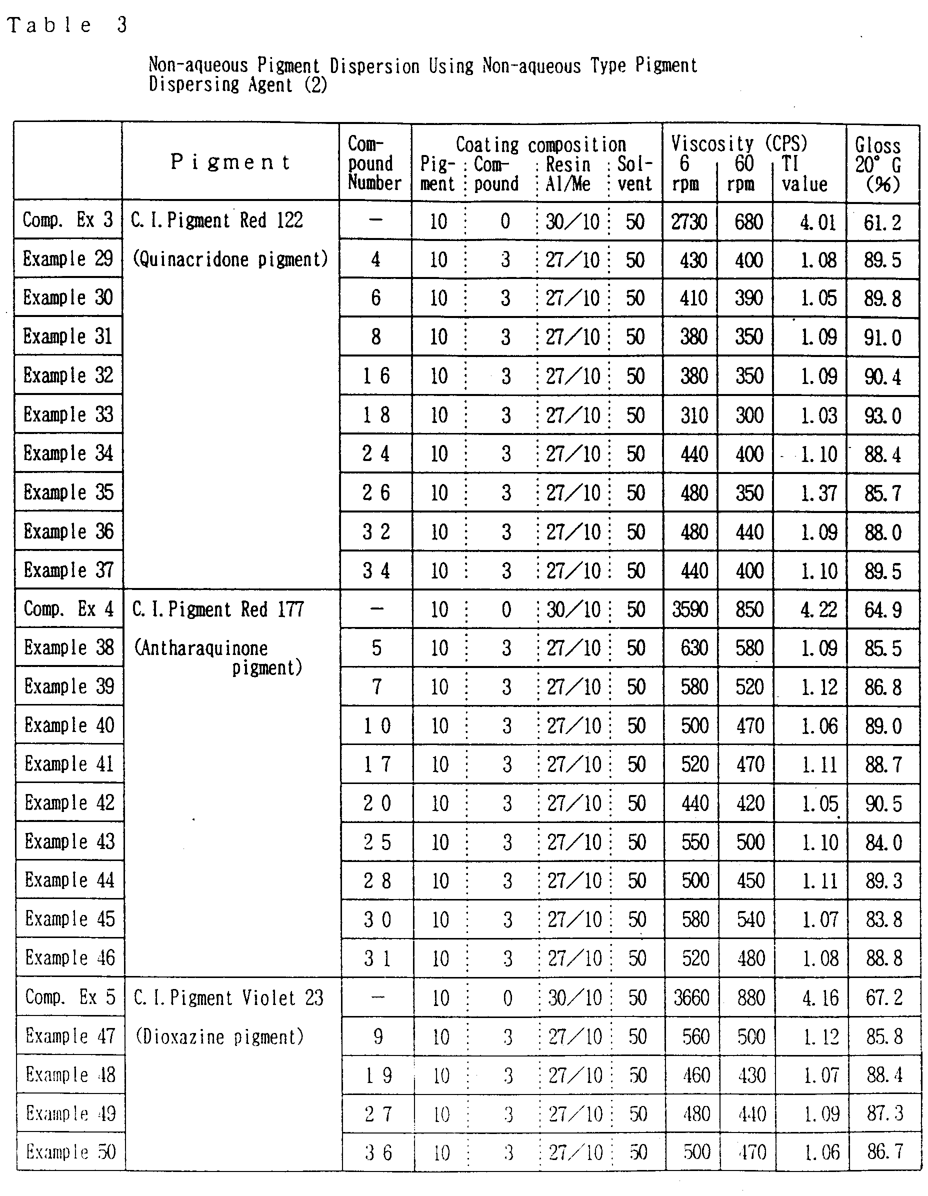

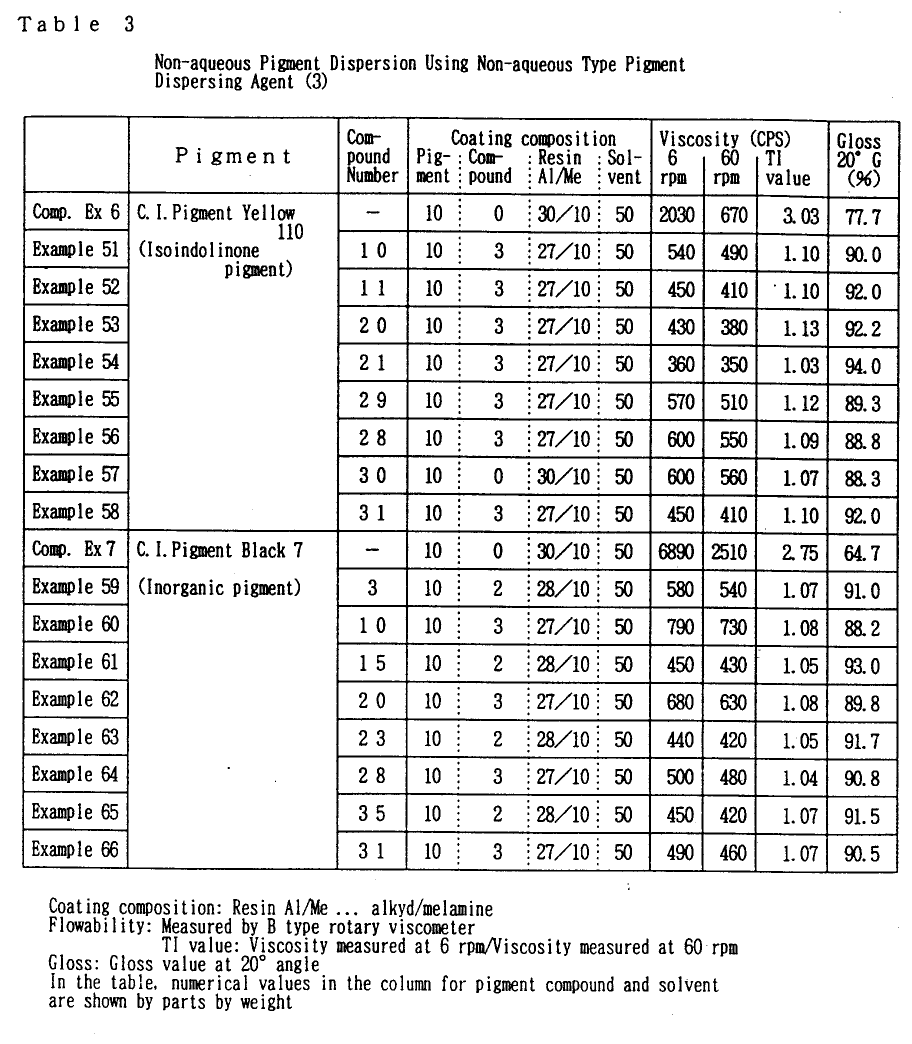

The features disclosed in the foregoing description, in the claims and/or in the accompanying drawings may, both seperately and in any combination thereof, be material for realising the invention in diverse forms thereof.

## Claims

1. A non-aqueous type pigment dispersing agent having a portion which has a high affinity with a pigment and which has at least one type selected from the group consisting of an organic dye, anthraquinone and acridone only at a terminal end or at both terminal ends of at least one polymer selected from the group consisting of a linear urethanic polymer and a linear acrylic polymer.

2. A non-aqueous type pigment dispersing agent as defined in claim 1, wherein the linear urethanic polymer has at least one group selected from the group consisting of a primary amino group, a secondary amino group, a hydroxy group and an isocyanate group only at a terminal end or at both terminal ends of the polymer, the portion having a high affinity with the pigment has at least one reactive group selected from the group consisting of -COCl, -SO₂Cl, -CH₂Cl, -CH₂NHCOCH₂Cl, -COOH, -NH₂, -NHR and -OH, and the group at the terminal end of the linear urethanic polymer is made to react with the reactive group in the portion having a high affinity with the pigment, wherein R represents an alkyl group or a substituted alkyl group.

3. A non-aqueous type pigment dispersing agent as defined in claim 1, wherein the linear acrylic polymer has a primary amino group and/or a secondary amino group only at a terminal end or at both terminal ends of the polymer, the portion having a high affinity with the pigment has at least one reactive group selected from the group consisting of -COCl, -SO₂Cl, -CH₂Cl and -CH₂NHCOCH₂Cl, and the primary amino group and/or the secondary amino group is made to react with the reactive group.

4. A non-aqueous type pigment dispersing agent as defined in claim 3, wherein the linear acrylic polymer is a linear acrylic polymer formed by polymerizing a monomer having a radical polymerizable unsaturated bond by using a chain transfer agent having a primary amino group and/or a secondary amino group.

5. A non-aqueous type pigment dispersing agent as defined in claim 1, wherein the linear acrylic polymer is a linear acrylic polymer which is formed by polymerizing a monomer having a radical polymerizable unsaturated bond by using the portion which has a high affinity with the pigment and has an -SH group as a chain transfer agent.

6. A pigment composition comprising a non-aqueous type pigment dispersing agent having a portion which has a high affinity with a pigment and which has at least one type selected from the group consisting of an organic dye, anthraquinone and acridone only at a terminal end or at both terminal ends of at least one polymer selected from a linear urethanic polymer and a linear acrylic polymer, and a pigment.

7. A pigment composition as defined in claim 6 comprising a non-aqueous type pigment dispersing agent, in which the the linear urethanic polymer has at least one group selected from the group consisting of a primary amino group, a secondary amino group, a hydroxy group and an isocyanate group only at a terminal end or at both terminal ends of the polymer, the portion having a high affinity with the pigment has at least one reactive group selected from the group consisting of -COCl, -SO₂Cl, -CH₂Cl, -CH₂NHCOCH₂Cl, -COOH, -NH₂, -NHR and -OH, and the group at the terminal end of the linear urethanic polymer and the reactive group in the portion having a high affinity with the pigment are made to react, and a pigment, wherein R represents an alkyl group or a substituted alkyl group.

8. A pigment composition as defined in claim 6 comprising a non-aqueous type pigment dispersing agent, in which the linear acrylic polymer has a primary amino group and/or a secondary amino group only at a terminal end or at both terminal ends of the polymer, the portion having a high affinity with the pigment has at least one reactive group selected from the group consisting of -COCl, -SO₂Cl, -CH₂Cl and -CH₂NHCOCH₂Cl, and the primary amino group and/or the secondary amino group are made to react with the reactive group, and a pigment.

9. A pigment composition as defined in claim 8 comprising a non-aqueous type pigment dispersing agent, in which the linear acrylic polymer is a linear acrylic polymer formed by polymerizing a monomer having a radical polymerizable unsaturated bond by using a chain transfer agent having a primary amino group and/or a secondary amino group, and a pigment.

10. A pigment composition as defined in claim 6 comprising a non-aqueous pigment dispersing agent, in which the linear acrylic polymer which is formed by polymerizing a monomer having a radical polymerizable unsaturated bond by using the portion which has a high affinity with the pigment and has an -SH group as a chain transfer agent, and a pigment.

11. A non-aqueous pigment dispersion comprising a non-aqueous type pigment dispersing agent which has at least one portion having a high affinity with a pigment and which has at least one type selected from the group consisting of an organic dye, anthraquinone and acridone only at a terminal end or at both terminal ends of at least one polymer selected from a linear urethanic polymer and a linear acrylic polymer, a pigment and a non-aqueous resin.

12. A non-aqueous pigment dispersion as defined in claim 11 comprising a non-aqueous type pigment dispersing agent, in which the linear urethanic polymer has at least one group selected from the group consisting of a primary amino group, a secondary amino group, a hydroxy group and an isocyanate group only at a terminal end or at both terminal ends of the polymer, the portion having a high affinity with the pigment has at least one reactive group selected from the group consisting of -COCl, -SO₂Cl, -CH₂Cl, -CH₂NHCOCH₂Cl, -COOH, -NH₂, -NHR and -OH, and the group at the terminal end of the linear urethanic polymer and the reactive group in the portion having a high affinity with the pigment are made to react, a pigment and a non-aqueous resin, wherein R represents an alkyl group or a substituted alkyl group.

13. A non-aqueous pigment dispersion as defined in claim 11 comprising a non-aqueous type pigment dispersing agent, in which the linear acrylic polymer has a primary amino group and/or a secondary amino group only at a terminal end or at both terminal ends of the polymer, the portion having a high affinity with a pigment has at least one reactive group selected from the group consisting of -COCl, -SO₂Cl, -CH₂Cl and -CH₂NHCOCH₂Cl, and the primary amino group and/or the secondary amino group and the reactive group are made to react, a pigment and an aqueous resin.

14. A non-aqueous pigment dispersion as defined in claim 13 comprising a non-aqueous type pigment dispersing agent, in which the linear acrylic polymer is a linear acrylic polymer formed by polymerizing a monomer having a radical polymerizable unsaturated bond by using a chain transfer agent having a primary amino group and/or a secondary amino group, a pigment and a non-aqueous resin.

15. A non-aqueous pigment dispersion as defined in claim 11 comprising a non-aqueous type pigment dispersing agent, in which the linear acrylic polymer which is formed by polymerizing a monomer having a radical polymerizable unsaturated bond by using the portion which has a high affinity with the pigment and has an -SH group as a chain transfer agent, a pigment and a non-aqueous resin.

16. A pigment composition as defined in claim 6, wherein the pigment is at least one of pigments selected from the group consisting of a phthalocyanine pigment, a quinacridone pigment, an anthraquinone pigment, a dioxazine, an isoindolinone pigment and an inorganic pigment.

17. A non-aqueous pigment dispersion as defined in claim 11, wherein the pigment is at least one of pigments selected from the group consisting of a phthalocyanine pigment, a quinacridone pigment, an anthraquinone pigment, a dioxazine pigment, an isoindolinone pigment, and an inorganic pigment and the non-aqueous resin is at least one of resins selected from the group consisting of lime rosin varnish, polyamide resin, vinyl chloride resin, nitrocellulose lacquer, amino alkyd resin, acryl lacquer, amino acrylic resin and urethanic resin.
